Europäisches Patentamt

European Patent Office

Office européen des brevets

(19)

(11)  **EP 0 961 938 B1**

(12)  **FASCICULE DE BREVET EUROPEEN**

(45) Date de publication et mention
de la délivrance du brevet:
**28.08.2002   Bulletin 2002/35**

(21) Numéro de dépôt: **98909552.6**

(22) Date de dépôt: **17.02.1998**

(51) Int Cl.⁷: $G01S\ 5/00$

(86) Numéro de dépôt international:
**PCT/FR98/00301**

(87) Numéro de publication internationale:
**WO 98/037431 (27.08.1998 Gazette 1998/34)**

(54) **SYSTEME POUR LA DETECTION A DISTANCE DE LA POSITION D'UN MOBILE**

SYSTEM ZUR ORTSBESTIMMUNG EINES FAHRZEUGES AUS DER FERNE

SYSTEM FOR REMOTE SENSING OF THE POSITION OF A MOVING VEHICLE

(84) Etats contractants désignés:
**DE FR GB IT SE**

(30) Priorité: **18.02.1997   FR 9701889**

(43) Date de publication de la demande:
**08.12.1999   Bulletin 1999/49**

(73) Titulaire: **THALES AVIONICS S.A.**
**78141 Vélizy Villacoublay Cédex (FR)**

(72) Inventeurs:
• **DUSSURGEY, Charles-Thomson-CSF S.C.P.I.**
**F-94117 Arcueil Cedex (FR)**

• **RENARD, Alain-Thomson-CSF S.C.P.I.**
**F-94117 Arcueil Cedex (FR)**

(74) Mandataire: **Guérin, Michel**
**Thomson-CSF Propriété Intellectuelle,**
**13, Avenue du Président Salvador Allende**
**94117 Arcueil Cédex (FR)**

(56) Documents cités:
| | |
|---|---|
| EP-A- 0 444 738 | EP-A- 0 512 789 |
| EP-A- 0 545 636 | WO-A-95/28776 |
| WO-A-97/22017 | DE-A- 19 630 562 |
| US-A- 4 622 557 | US-A- 5 153 598 |
| US-A- 5 420 592 | US-A- 5 594 454 |

## Description

L'invention est relative à un système pour la détection de la position d'un mobile utilisant les signaux émis par un ensemble de satellites ou de balises.

Elle concerne plus particulièrement un tel système dans lequel le mobile comporte un dispositif pour, d'une part, la réception des signaux provenant de satellites ou de balises, et, d'autre part, pour la réémission de ces signaux vers un dispositif de traitement disposé en un autre emplacement, par exemple de position fixe au sol, le dispositif de traitement déterminant la position du mobile.

Pour déterminer la position d'un mobile aérien, maritime ou terrestre, il existe aujourd'hui deux réseaux de satellites, l'un étant affecté au système GPS ("Global Positionning System") et l'autre au système GLONASS ("Global Orbiting Navigation Satellite System"). Dans ce qui suit, on se référera surtout au réseau GPS.

Ces deux réseaux utilisent chacun une constellation de satellites tournant autour de la terre.

Par ailleurs, il est envisagé l'utilisation de satellites géostationnaires et de balises fixes au sol.

Tous ces systèmes de positionnement sont basés sur la détermination de la distance de l'objet, dont on veut déterminer la position, à trois satellites ou balises dont la position est connue à chaque instant.

On fait cependant intervenir au moins un quatrième satellite, car la mesure des distances est fonction d'un paramètre supplémentaire qui est le temps.

En effet, la mesure de la distance du lieu à repérer au satellite s'effectue de la façon suivante

Le satellite émet un signal à un instant précis, cet instant étant une donnée transmise par le satellite. Le signal hertzien parcourt la distance séparant le satellite du point à repérer à la vitesse de la lumière. La distance est proportionnelle au temps séparant l'instant d'émission, fourni par le signal du satellite, de l'instant de réception.

Dans le système GPS, chaque satellite émet sur une fréquence porteuse L1 égale à 1 575,42 MHz ainsi que sur une fréquence porteuse auxiliaire L2 de fréquence 1 227,6 MHz.

La fréquence porteuse, qui constitue une référence de temps et sert à la détermination des vitesses, est modulée par une séquence binaire pseudo-aléatoire répétitive, selon une modulation de phase de type BPSK ("Binary Phase Shift Keying"). Chaque séquence constitue un code qui, dans le cas du GPS, a une longueur de 1 023 bits. Ces codes sont émis à une fréquence de 1,023 MHz. Ils coexistent avec d'autres codes émis à une fréquence dix fois plus élevée : 10,23 MHz. Les codes C/A à 1,023 MHz permettent en principe une détermination de position approximative tandis que les codes P à la fréquence dix fois plus élevée permettent une localisation précise.

Le rôle de chaque code est triple : d'une part, il permet d'identifier le satellite émetteur, d'autre part, il facilite la détection et la démodulation des signaux qui sont noyés dans un bruit très élevé, la détection étant effectuée par corrélation entre le code reçu du satellite et un code identique produit localement, et d'autre part, enfin, il sert à la mesure des déphasages temporels pour le calcul des distances.

La fréquence porteuse L1 est en outre codée par d'autres données binaires qui représentent, notamment, la date d'émission du signal. Le satellite étant identifié et la date d'émission du signal étant connue, la position de ce satellite au moment de l'émission du signal est alors connue avec une grande précision.

Pour mémoire, on indiquera ici que dans le système GLONASS la fréquence porteuse L1 constitue l'identification du satellite. Elle diffère donc d'un satellite à un autre. Les fréquences L1 s'étalent d'environ 1 600 MHz à 2 615 MHz. Un code pseudo-aléatoire est également prévu dans ce système GLONASS mais son utilité est limitée à l'extraction du signal dans le bruit et à la détermination des écarts temporels pour la mesure des distances entre récepteur et satellite.

Il est important de noter que, dans tous les cas, la fréquence de la porteuse comporte en elle-même une information qui est une référence de temps et de dérive de temps.

Il est fréquent que les signaux reçus par un objet, pour déterminer sa position, soient réémis vers un autre emplacement, notamment une station au sol. En particulier il est préférable que les mobiles aériens légers, éventuellement destructibles, comportent un minimum d'équipement de traitement de données, cet équipement étant lourd et onéreux.

A cet effet, à bord du mobile on prévoit une transposition ou changement de fréquence des signaux reçus des satellites ou balises et un émetteur pour diriger les signaux en fréquence transposée vers un récepteur GPS, ou analogue, au sol.

Cette transposition de fréquence est rendue nécessaire par le fait que le signal émis par le mobile ne doit pas être confondu avec celui provenant d'un satellite.

En général, la transposition est une augmentation modérée de la fréquence porteuse L1 jusqu'à 2 GHz environ. Dans ce cas, la porteuse à 1 575 MHz environ est simplement transposée à 2 GHz environ avec l'information modulante qu'elle porte (modulation de phase de la porteuse).

La différence relativement faible entre la fréquence d'émission du mobile vers le sol et la fréquence reçue du satellite permet de limiter l'imprécision supplémentaire apportée par l'imprécision, inévitable, de l'écart de fréquences, cette imprécision supplémentaire étant d'autant plus importante que l'écart est grand.

D'autres facteurs limitent le choix de la fréquence transposée : d'une part, les fréquences légalement et physiquement disponibles, et, d'autre part, l'effet Doppler dû à la vitesse du mobile par rapport au sol. En effet, l'effet Doppler se traduit par un écart de fréquence qui est proportionnel à la fréquence de la porteuse de l'émetteur du mobile.

La limitation du choix de la fréquence de transmission est particulièrement gênante car elle peut empêcher de choisir une fréquence pour laquelle la transmission est optimum.

La transposition de la fréquence porteuse, à l'aide d'un oscillateur local et un mélangeur, est une première solution pour réemettre un signal de position depuis le mobile vers une station de mesure.

Il existe par ailleurs une solution de retransmission numérique des informations issues des satellites, solution qui élimine les problèmes d'effet Doppler et qui permet de choisir la fréquence de transmission comme on le souhaite, mais solution nécessitant une électronique plus complexe embarquée dans le mobile. Cette solution consiste à numériser le signal analogique issu du satellite après l'avoir filtré dans une bande utile, et à moduler par les informations numériques un signal à une fréquence porteuse quelconque. Une telle solution est divulguée dans le document US-A-5 594 454.

L'invention remédie aux inconvénients de ces deux solutions.

Selon l'invention, pour déterminer dans un récepteur à distance la position du mobile, on reçoit dans le mobile, sous forme analogique, les signaux des satellites, on les traite sous forme analogique, et on se sert des signaux analogiques traités pour moduler une fréquence porteuse avant d'envoyer cette fréquence vers le récepteur à distance. Par conséquent, d'une part on ne numérise pas les signaux issus des satellites, et d'autre part on ne se contente pas d'une simple transposition de la fréquence de ces signaux, mais on <u>module</u> (en phase en fréquence ou en amplitude) une autre porteuse.

Le dispositif qui fait l'objet de la présente invention est défini dans la revendication 1.

Une caractéristique de l'invention est donc le fait que la transmission des signaux analogiques du mobile vers le récepteur GPS (ou analogue) s'effectue à l'aide d'une modulation supplémentaire de ces signaux analogiques sur une fréquence porteuse qui ne comporte pas d'information utilisée pour le calcul de la position et/ou la vitesse du mobile, c'est-à-dire une fréquence porteuse indépendante de celle qui vient des satellites.

Le récepteur au sol (ou sur un autre mobile) comporte des moyens de démodulation du signal ainsi modulé.

La fréquence porteuse de la modulation supplémentaire peut être choisie dans une large gamme car elle ne joue aucun rôle dans le calcul des coordonnées et de la vitesse du mobile. L'écart entre la fréquence de la porteuse de la modulation supplémentaire et la fréquence de la porteuse du signal provenant du satellite peut être grand car l'effet Doppler affectant, au sol, la fréquence de cette porteuse de modulation supplémentaire n'apporte pas d'imprécision dans le calcul des coordonnées ou de la vitesse du mobile. Dans un exemple, la porteuse de transmission mobile/récepteur GPS a une fréquence de l'ordre de 70 GHz.

Bien entendu, il n'est pas nécessaire que la fréquence de la porteuse de transmission (porteuse de modulation supplémentaire) soit très précise car elle ne porte pas d'information en elle-même.

Dans le mode de réalisation préféré de l'invention, sur le mobile on prévoit, en amont de la modulation supplémentaire, un moyen de changement ou transposition de fréquence qui ramène la fréquence du signal à transmettre à une valeur faible, avantageusement réduite à la fréquence des signaux utiles porteurs d'information de position dans le signal satellite. Dans ce cas, la bande passante en sortie du moyen de changement de fréquence est comprise entre 0 et quelques MHz (par exemple de l'ordre de 10). Dans le cas du GPS civil ou du GPS militaire dégradé, on choisira, par exemple, une bande passante comprise entre 0 et 2 MHz, tandis que, dans le cas du GPS de type militaire, on choisira par exemple une bande passante comprise entre 0 et 20 MHz ou entre 0 et 10 MHz.

Ce signal, qui se trouve dans un domaine de fréquences relativement bas, est soumis à la porteuse de transmission mobile/récepteur. L'effet Doppler sur le signal lui-même (à quelques MHz) est négligeable. Par exemple l'effet Doppler sur un signal à 5 MHz est 200 fois moins important que l'effet Doppler sur un signal à 1 GHz.

L'écart entre la fréquence du signal provenant d'un satellite GPS (1,6 GHz environ) et la fréquence (quelques MHz) est donc d'environ 1,6 GHz ; cet écart est relativement plus important que l'écart de 0,4 GHz qui est utilisé dans la technique classique de retransmission d'un signal satellite transposé en fréquence. Toutefois cette augmentation d'écart n'apporte qu'une faible dégradation ; cette dernière est largement compensée par la diminution considérable de la dégradation due à l'effet Doppler.

En outre il est possible de compenser l'imprécision supplémentaire introduite par cet écart de fréquence en transmettant un signal représentatif de la fréquence locale servant à la transposition de fréquence. Avantageusement, ce signal représentatif a une fréquence proche de la bande de fréquences en sortie du moyen de transposition. Ce signal représentatif transmis peut être utilisé, dans le récepteur, pour effectuer la compensation requise.

Quel que soit le mode de réalisation choisi, on appréciera que l'invention permet une transmission mobile/récepteur GPS à une fréquence qui peut être choisie pratiquement à volonté en fonction des besoins et du spectre disponible. Par exemple pour la détection et/ou le guidage d'un missile se trouvant à faible distance d'un récepteur, on pourra utiliser une fréquence de transmission de 77 GHz pour laquelle la transmission est à courte portée, ce qui permet que le signal du mobile ne soit détectable que dans un faible rayon.

D'autres caractéristiques et avantages de l'invention apparaîtront avec la description de certains de ses modes de réalisation, celle-ci étant effectuée en se référant aux dessins ci-annexés sur lesquels :

la figure 1 est un schéma de principe d'un dispositif conforme à l'invention qui est destiné à équiper un mobile dont on veut détecter la position,
la figure 2 est un diagramme illustrant certaines propriétés du dispositif de la figure 1, et
la figure 3 est un schéma d'un dispositif conforme à l'invention, pour la réception de signaux fournis par un dispositif du type de celui de la figure 1.

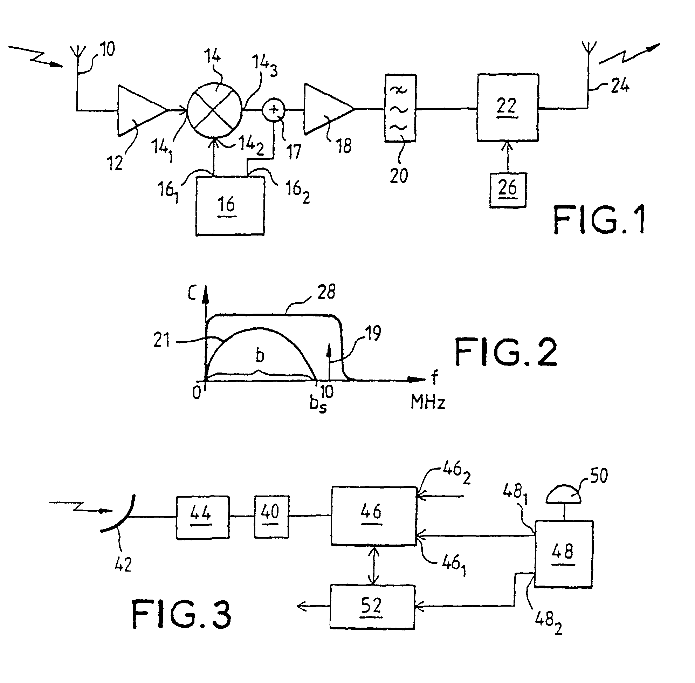

Dans tous les exemples que l'on va décrire ci-dessous, on se référera uniquement au système GPS, bien que, comme déjà mentionné, l'invention s'applique à tout système de détection de position et éventuellement de vitesse.
Ces exemples concernent la détection de positions d'un mobile aérien tel qu'un missile ou une bombe. Le récepteur est au sol.
Le dispositif représenté sur la figure 1 est installé sur un tel mobile aérien (non représenté). Il comporte une antenne 10 de réception de signaux fournis par la constellation des satellites GPS. Après amplification, à l'aide d'un amplificateur 12, le signal de l'antenne est appliqué sur la première entrée $14_1$ d'un organe 14, tel qu'un mélangeur, de changement de fréquence, dont la seconde entrée $14_2$ reçoit un signal local fourni par la sortie $16_1$ d'un générateur 16. Le signal local appliqué sur l'entrée $14_2$ a une fréquence de 1 580 MHz, alors que le signal détecté par l'antenne 10 est le signal de la porteuse L1 à fréquence 1 575,42 MHz.
Le signal apparaissant sur la sortie $14_3$ du mélangeur 14 est à une fréquence égale à la différence entre les fréquences des signaux appliqués sur les entrées $14_1$ et $14_2$. Ce signal est appliqué à un second amplificateur 18, puis est transmis à un filtre 20 et, de là, à un modulateur-émetteur 22 dont la sortie est reliée à une antenne 24 d'émission, dirigée vers un récepteur GPS au sol.
Le signal de sortie du filtre 20 module, dans le modulateur-émetteur 22, une fréquence porteuse à 77 GHz fournie par un générateur 26. L'organe 22 module en fréquence (modulation FM). En variante, on utilise une modulation d'amplitude ou une modulation de phase.
Le synthétiseur 16 de fréquence fournit un signal de référence à une fréquence de 10 MHz représentatif (à un facteur multiplicatif près : 158 dans l'exemple) de la fréquence du signal local. Cette fréquence de base est appliquée, par une sortie $16_2$, à l'entrée de l'amplificateur 18 par l'intermédiaire d'un additionneur 17 dont la seconde entrée reçoit la sortie $14_3$ du mélangeur 14. La fréquence de référence à 10 MHz est ainsi transmise, avec le signal de la sortie $14_3$ du mélangeur 14, par l'antenne 24 vers le récepteur GPS au sol. Elle est également soumise à la modulation de transmission par l'organe 22.
La figure 2 est un diagramme montrant la caractéristique 28 du filtre 20. Sur ce diagramme, on a porté, en abscisses, la fréquence f en MHz et, en ordonnées, le gain G. La bande passante du filtre 20 est comprise entre 0 et une fréquence légèrement supérieure à 10 MHz. Sur ce digramme, b représente la bande passante du signal sur la sortie $14_3$ du mélangeur 14. Sa limite supérieure $b_s$ est légèrement inférieure à 10 MHz. De cette manière, le signal de référence 19 à 10 MHz est distinct des autres signaux. Sur la figure 2, on a également représenté le signal GPS 21 occupant la bande b.
Le signal appliqué sur l'entrée du modulateur-émetteur 22 est donc un signal à basse fréquence entre 0 et 10 MHz qui contient toutes les informations transmises par les satellites de la constellation GPS ainsi qu'un signal de référence fourni par le synthétiseur de signal local 16.
Le générateur 26 fournit un signal de porteuse à 77 GHz avec une faible précision. Il est important de noter que, contrairement au signal fourni sur l'entrée $14_2$ du mélangeur 14, il n'est pas nécessaire que la fréquence de ce signal de porteuse ait une grande précision, car cette porteuse n'intervient pas pour les mesures ; elle sert uniquement à la transmission des signaux du mobile au sol et n'intervient pas dans la valeur ou les caractéristiques des signaux mesurés.
La fréquence porteuse à 77 GHz ne permet une transmission que sur une relativement courte distance, ce qui constitue un avantage si on désire que les signaux transmis par l'antenne 24 ne perturbent pas l'environnement ou soient difficiles à détecter. Il est à noter qu'avec une modulation de fréquence, par rapport à une modulation d'une autre nature, on obtient une transition plus franche entre une zone de fonctionnement et une zone où l'on ne souhaite pas qu'un signal soit détecté.
L'écart $d_{rsi}$ de la fréquence reçue au sol, par rapport à la fréquence nominale provenant du satellite Si, satisfait à la relation suivante :

$$(1) \qquad d_{rsi} = d_{esi} + \frac{V(\text{mobile / si})}{\lambda_{L_1}} + \frac{V(\text{mobile / sol})}{\lambda} + \varepsilon_{local}$$

Dans cette relation :

$d_{esi}$ est l'écart (normalement faible ou négligeable) entre la fréquence émise par le satellite Si et la fréquence nominale,

V(mobile/Si) est la vitesse du mobile par rapport au satellite Si,

V(mobile/sol) est la vitesse du mobile par rapport au sol,

$\lambda_{L1}$ est la longueur d'onde du signal GPS à fréquence $L_1$,

$\lambda$ est la longueur d'onde de la modulation du signal en sortie du mélangeur 14 (c'est-à-dire la longueur de la porteuse à 5 MHz environ) , et

$\varepsilon_{local}$ est l'écart de la fréquence locale (sur la sortie $16_1$) par rapport à sa valeur nominale.

On comprend aisément qu'un décalage, ou une imprécision, sur la fréquence fournie par le synthétiseur 16 entraîne une imprécision sur la mesure $d_{rsi}$ et donc sur la mesure de vitesse. C'est pourquoi cette fréquence doit être choisie avec une grande précision ou doit être compensée.

Par contre, la fréquence de la porteuse fournie par le générateur 26 n'intervient pas dans la précision des mesures.

La valeur de la fréquence locale appliquée sur l'entrée $14_2$ du mélangeur 14 introduit cependant une incertitude ou un décalage $\varepsilon_{local}$ qui est fonction de la valeur de cette fréquence. La valeur de 1 580 MHz introduit une incertitude acceptable.

Par ailleurs, le signal reçu au sol diffère de la fréquence émise par l'antenne 24 en raison de l'effet Doppler provoqué par la vitesse de déplacement du mobile par rapport au sol. Il est important de noter que l'effet Doppler sur la porteuse à 77 GHz (du générateur 26) n'est pas gênant puisque la fréquence de cette porteuse n'intervient pas dans la mesure. On remarquera d'ailleurs que cet écart Doppler n'apparaît pas dans la relation (1). Le signal utile, qui module la porteuse à 77 GHz, est à une fréquence maximale de 10 MHz. Pour cette fréquence, l'effet Doppler dû à la vitesse du mobile par rapport au sol est négligeable. Cet effet correspond à la valeur $\frac{V(mobile / sol)}{\lambda}$ dans la relation (1).

La distance du mobile à un satellite donné est déterminée par la formule suivante

$$(2) \qquad t_{rsi} = t_{esi} + \frac{d(si / mobile)}{c} + \frac{d(mobile / sol)}{c}$$

Dans cette formule :

$t_{rsi}$ est l'instant de réception au sol du signal, émis à l'instant $t_{esi}$, par le satellite $S_i$, ce signal étant d'abord capté par le mobile puis retransmis vers le récepteur au sol,

c est la vitesse de la lumière,

d(si/mobile) est la distance du satellite $S_i$ au mobile, et,

d(mobile/sol) est la distance du mobile au sol.

L'instant $t_{esi}$ est fourni par le signal émis par le satellite.

Dans le récepteur GPS, de façon classique, on prévoit un calculateur qui détermine la position du mobile à partir d'un système d'équations (2), le nombre d'équations étant au moins égal à 4 (le nombre de signaux de satellites détectés).

Pour les calculs de distance, on tiendra compte aussi du décalage, ou de l'imprécision, d'une horloge de réception au sol.

Dans ce système d'équations (2), le temps de parcours des signaux du mobile au sol est le même pour toutes les équations. On peut, pour le calcul, considérer ce temps de la même manière que le décalage du signal d'horloge au sol par rapport à une référence de temps.

De façon générale, quel que soit le mode de réalisation, la fréquence de modulation pour la transmission des signaux sera de préférence au moins égale à 3 GHz et avantageusement supérieure à 10 GHz.

La figure 3 représente l'installation au sol qui, pour l'essentiel, est un récepteur GPS classique. Toutefois, par rapport à un tel récepteur classique, il comporte, d'une part, un démodulateur 40 et, d'autre part, des moyens de traitement (non montrés en détail) pour compenser l'incertitude ou le décalage temporel provenant du signal de référence appliqué sur l'entrée $14_2$ du mélangeur 14. Ce traitement est obtenu grâce au signal à 10 MHz fourni sur la sortie $16_2$ du synthétiseur 16 et transmis au sol.

Dans l'exemple représenté, l'installation au sol comprend donc une antenne 42 de réception dont le signal est appliqué à un récepteur de télémétrie 44 qui assure des fonctions classiques de filtrage et d'amplification. La sortie du récepteur 44 est reliée, par l'intermédiaire du démodulateur 40, à un circuit 46 de calcul de la trajectoire du mobile.

Par ailleurs, l'installation comprend un récepteur GPS de référence 48 comportant sa propre antenne 50. De façon en soi connue, le récepteur de référence 48 permet de comparer, à chaque instant, la distance mesurée entre ce récepteur au sol et le satellite à la distance, connue a priori, entre ce récepteur et le satellite. Cette comparaison est utilisée pour corriger les mesures fournies par le mobile. Ce type de correction, qui permet une grande précision de la localisation du mobile, est appelé un système GPS différentiel.

Le récepteur 48 de référence comporte ainsi une sortie d'horloge $48_1$ reliée à une entrée d'horloge correspondante $46_1$ du circuit 46. Il comporte aussi une sortie $48_2$ fournissant les données de référence sur une entrée correspondante d'un circuit 52 de calcul de position, de vitesse et de temps (PVT) qui, avec le circuit 46, permet de calculer la trajectoire. Le circuit 46 comporte en outre une entrée $46_2$ recevant un signal d'aide (inertielle, par exemple) pour améliorer les performances d'accrochage et de poursuite des signaux GPS.

## Revendications

1. Dispositif de réception/émission à bord d'un mobile, ce dispositif recevant des signaux émis par un ensemble de satellites ou balises qui servent à déterminer la position du mobile grâce à la mesure de la distance entre ce dernier et des satellites ou balises dont les positions sont connues, chaque distance étant déterminée à partir du temps séparant l'instant d'émission d'un signal par un satellite, ou balise, de l'instant de réception du même signal par le mobile, le signal émis par chaque satellite ou balise comportant une fréquence porteuse dont la valeur constitue un paramètre utilisé pour la détermination des vitesses et qui est modulée par un code indiquant l'instant d'émission, ledit dispositif comprenant d'une part un circuit (14) de transposition de fréquence pour transposer en bande de basse fréquence des signaux reçus des satellites ou balises, le circuit de transposition utilisant à cet effet une fréquence locale très proche de la fréquence des signaux des satellites, et d'autre part un modulateur (22), en aval du circuit de transposition, qui module les signaux analogiques reçus des satellites, transposés en bande de basse fréquence, sur une porteuse dont la fréquence est indépendante de la détermination de position et de vitesse, un circuit d'émission de la fréquence porteuse modulée vers un récepteur à distance (42), **caractérisé en ce que** le modulateur reçoit également un signal représentatif de la fréquence locale, ce signal ayant une fréquence proche de la bande de basse fréquence des signaux reçus des satellites ou balises.

2. Dispositif de réception/émission selon la revendication 1, **caractérisé en ce que** le signal représentatif de la fréquence locale a une fréquence se trouvant en dehors de la bande passante (b) des signaux reçus des satellites ou balises et transposés en bande de basse fréquence, mais à proximité de cette bande.

3. Dispositif selon l'une des revendications 1 et 2 ? **caractérisé en ce que** la fréquence de la porteuse de modulation du signal transmis depuis le mobile vers le récepteur est de l'ordre de 77 GHz.

4. Dispositif selon l'une quelconque des revendications 1 à 3, **caractérisé en ce que** la modulation du signal transmis du mobile vers le récepteur est une modulation de fréquence, une modulation de phase ou une modulation d'amplitude.

5. Dispositif selon l'une des revendications 1 à 4, **caractérisé en ce que** la fréquence du signal représentatif de la fréquence locale est d'environ 10 MHz.

6. Dispositif selon l'une des revendications 1 à 5, **caractérisé en ce que** ledit signal représentatif est un sous-multiple de la fréquence locale servant à la transposition des signaux reçus des satellites ou balises.

7. Récepteur destiné à recevoir des signaux émis par un dispositif selon l'une quelconque des revendications précédentes et propre à calculer la position du mobile grâce aux signaux reçus, **caractérisé en ce qu'**il comprend un démodulateur (40) pour la démodulation des signaux émis par ledit dispositif.

8. Récepteur selon la revendication 7 et destiné à recevoir les signaux fournis par un dispositif selon l'une quelconque des revendications 10 à 12, **caractérisé en ce qu'**il comporte un moyen pour compenser le décalage de fréquence introduit par le signal à fréquence locale, cette compensation faisant appel au signal représentatif du signal local qui est transmis par ledit dispositif.

## Patentansprüche

1. Empfangs-/Sendevorrichtung an Bord eines beweglichen Körpers, wobei diese Vorrichtung Signale empfängt, die von einer Gruppe von Satelliten oder Baken ausgesendet werden und dazu dienen, die Position des beweglichen Körpers anhand der Messung des Abstandes zwischen diesem letzteren und den Satelliten oder Baken, deren Positionen bekannt sind, zu bestimmen, wobei jeder Abstand anhand der Zeit bestimmt wird, die den Zeitpunkt des Aussendens eines Signals durch einen Satelliten oder eine Bake von dem Zeitpunkt des Empfangs dieses Signals durch den beweglichen Körper trennt, wobei das von jedem Satelliten oder jeder Bake ausgesendete Signal eine Trägerfrequenz besitzt, deren Wert einen für die Bestimmung der Geschwindigkeiten verwendeten Parameter bildet und die durch einen Code moduliert wird, der den Sendezeitpunkt angibt, wobei die Vorrichtung einerseits eine Frequenzumsetzungsschaltung (14), die die von den Satelliten oder Baken empfangenen Signale in ein Niederfrequenzband umsetzt und hierzu eine lokale Frequenz, die sehr nahe bei der Frequenz der Signale von den Satelliten liegt, benutzt, und andererseits auf der Ausgangsseite der Umsetzungsschaltung einen Modulator (22), der die von den Satelliten empfangenen analogen Signale, die in das Niederfrequenzband umgesetzt worden sind, auf einen Träger moduliert, dessen Frequenz von der Positions- und Geschwindigkeitsbestimmung unabhängig ist, sowie eine Schaltung zum Senden der modulierten Trägerfrequenz zu einem entfernten Empfänger (42) umfaßt, **dadurch gekennzeichnet, daß** der Modulator außerdem ein Signal empfängt, das die lokale Frequenz repräsentiert, wobei dieses Signal eine Frequenz besitzt, die sehr nahe bei dem Niederfrequenzband der von den Satelliten oder Baken empfangenen Signale liegt.

2. Empfangs-/Sendevorrichtung nach Anspruch 1, **dadurch gekennzeichnet, daß** das die lokale Frequenz repräsentierende Signal eine Frequenz besitzt, die außerhalb der Bandbreite (b) der von den Satelliten oder Baken empfangenen und in das Niederfrequenzband umgesetzten Signale, jedoch in der Umgebung dieses Bandes liegt.

3. Vorrichtung nach einem der Ansprüche 1 und 2, **dadurch gekennzeichnet, daß** die Frequenz des Modulationsträgers des von dem beweglichen Körper zum Empfänger gesendeten Signals in der Größenordnung von 77 GHz liegt.

4. Vorrichtung nach einem der Ansprüche 1 bis 3, **dadurch gekennzeichnet, daß** die Modulation des vom beweglichen Körper zum Empfänger gesendeten Signals eine Frequenzmodulation, eine Phasenmodulation oder eine Amplitudenmodulation ist.

5. Vorrichtung nach einem der Ansprüche 1 bis 4, **dadurch gekennzeichnet, daß** die Frequenz des die lokale Frequenz repräsentierenden Signals etwa 10 MHz beträgt.

6. Vorrichtung nach einem der Ansprüche 1 bis 5, **dadurch gekennzeichnet, daß** das repräsentative Signal ein Untervielfaches der lokalen Frequenz ist, die der Umsetzung der von den Satelliten oder Baken empfangenen Signale dient.

7. Empfänger, der dazu bestimmt ist, von einer Vorrichtung nach einem der vorhergehenden Ansprüche ausgesendete Signale zu empfangen, und die Position des beweglichen Körpers kraft der empfangenen Signale berechnen kann, **dadurch gekennzeichnet, daß** er einen Demodulator (40) für die Demodulation der von der Vorrichtung ausgesendeten Signale umfaßt.

8. Empfänger nach Anspruch 7, der dazu bestimmt ist, die von einer Vorrichtung nach einem der Ansprüche 10 bis 12 gelieferten Signale zu empfangen, **dadurch gekennzeichnet, daß** sie ein Mittel umfaßt, um die durch das Signal mit lokaler Frequenz eingeführte Frequenzverschiebung zu kompensieren, wobei diese Kompensation das Signal verwendet, das das von der Vorrichtung gesendete lokale Signal repräsentiert.

**Claims**

1. Reception/transmission device on board a moving vehicle, this device receiving signals transmitted by a collection of satellites or beacons which serve to determine the position of the moving vehicle through measurement of the distance between it and satellites or beacons whose positions are known, each distance being determined on the basis of the time separating the instant of transmission of a signal by a satellite, or beacon, from the instant of reception of the same signal by the moving vehicle, the signal transmitted by each satellite or beacon comprising a carrier frequency whose value constitutes a parameter used for the determination of the speeds and which is modulated by a code indicating the instant of transmission, the said device comprising on the one hand a frequency transposition circuit (14) for transposing the signals received from the satellites or beacons into a low-frequency band, the transposition circuit using for this purpose a local frequency very close to the frequency of the signals from the satellites, and on the other hand a modulator (22), downstream of the transposition circuit, which modulates the analogue signals received from the satellites, transposed into a low-frequency band, on a carrier whose frequency is independent of the determination of position and of speed, a circuit for transmitting the modulated carrier frequency to a remote receiver (42), **characterized in that** the modulator also receives a signal representative of the local frequency, this signal having a frequency close to the low-frequency band of the signals received from the satellites or beacons.

2. Reception/transmission device according to Claim 1, **characterized in that** the signal representative of the local frequency has a frequency lying outside the passband (b) of the signals received from the satellites or beacons and transposed into a low-frequency band, but in proximity to this band.

3. Device according to one of Claims 1 and 2? **characterized in that** the frequency of the carrier for modulating the signal sent from the moving vehicle to the receiver is of the order of 77 GHz.

4. Device according to any one of Claims 1 to 3, **characterized in that** the modulation of the signal sent from the moving vehicle to the receiver is a frequency modulation, a phase modulation or an amplitude modulation.

5. Device according to one of Claims 1 to 4, **characterized in that** the frequency of the signal representative of the local frequency is around 10 MHz.

6. Device according to one of Claims 1 to 5, **characterized in that** the said representative signal is a sub-multiple of the local frequency serving for the transposition of the signals received from the satellites or beacons.

7. Receiver intended for receiving signals transmitted by a device according to any one of the preceding claims and able to calculate the position of the moving vehicle by virtue of the signals received, **characterized in that** it comprises a demodulator (40) for demodulating the signals transmitted by the said device.

8. Receiver according to Claim 7 and intended for receiving the signals provided by a device according to any one of Claims 10 to 12, **characterized in that** it includes a means for compensating the frequency shift introduced by the local-frequency signal, this compensation calling upon the signal representative of the local signal which is sent by the said device.

FIG.1

FIG.2

FIG.3